# EUROPÄISCHE PATENTANMELDUNG

(11) **EP 2 023 182 A1**
(43) Veröffentlichungstag der Anmeldung: **11.02.2009**
(21) Anmeldenummer: 08013047.9
(22) Anmeldetag: 19.07.2008
(51) Int. Cl.: G02B 26/08

(54) **Prismengelenk**

(30) Priorität: 28.07.2007 DE 102007035574
(71) Anmelder: Diehl BGT Defence GmbH & Co.KG, 88662 Überlingen (DE)
(72) Erfinder: Baumann, Rainer, 88662 Überlingen (DE)
(74) Vertreter: Diehl Patentabteilung

(57) **Zusammenfassung**

Es wird ein Prismengelenk (1, 1', 1") für eine optische Schwenkeinrichtung (3) angegeben, welches ein um eine erste Drehachse (11) drehbar gelagertes erstes Prisma (14) und ein um eine zweite Drehachse (13, 13') gegenüber dem ersten Prisma (14) drehbar gelagertes zweites Prisma (15) umfasst, wobei sich die erste Drehachse (11) und die zweite Drehachse (13, 13') unter einem Schnittwinkel von 45° schneiden. Dabei weist das erste und das zweite Prisma (14 bzw. 15) jeweils eine erste (23, 24) und eine zweite Seitenfläche (26, 27) sowie eine Basisfläche (20, 21) auf, wobei die erste Seitenfläche (23, 24) zur Basisfläche (20, 21) um den Schnittwinkel und die zweite Seitenfläche (26, 27) zur Basisfläche (20, 21) um den halben Schnittwinkel geneigt ist. Weiter ist ein drittes Prisma (16) umfasst, welches gegenüber einer Basisfläche (30) unter dem Schnittwinkel symmetrisch geneigte Seitenflächen (32) aufweist. Dabei steht sich das erste und das zweite Prisma (14, 15) entlang der ersten Drehachse (11) im wesentlich spiegelsymmetrisch gegenüber und das dritte Prisma (16) ist, jeweils mit seinen Seitenflächen (32) angrenzend, zwischen dem ersten und dem zweiten Prisma (14 bzw. 15) angeordnet.

## Beschreibung

Die Erfindung betrifft ein Prismengelenk mit einer Anzahl von gegeneinander drehbar angeordneten Prismen für eine optische Schwenkeinrichtung. Das Prismengelenk soll es insbesondere ermöglichen, innerhalb eines großen Raumwinkelbereiches den optischen Pfad eines Aufnahme- oder Projektionsgerätes zu positionieren, so dass ein vergleichsweise kleiner Teil des Raumwinkelbereiches erfasst werden kann bzw. innerhalb dieses kleinen Teils eine Projektion ermöglicht ist.

Ein derartiges Prismengelenk ist in optischen Schwenkeinrichtungen für verschiedenste Verwendungsfälle einsetzbar. So kann das Prismengelenk in einer Schwenkeinrichtung zur Erstellung von Architekturaufnahmen, beispielsweise von Kircheninnenräumen oder dergleichen, oder zu einer kartographischen Erfassung von großen Räumen mittels Laserentfernungsmessung ebenso eingesetzt werden wie in einer Schwenkeinrichtung zur Projektion von Aufnahmen oder Filmen in bestimmten Raumwinkelbereichen. Auch ist das Prismengelenk in einer Schwenkeinrichtung einsetzbar, die als eine Überwachungs- oder Sucheinrichtung eingesetzt oder sich umgekehrt auch als ein 3D-Zielsimulator mit einer hochaufgelösten Zielprojektionsdarstellung eignet. Insbesondere eignet sich das Prismengelenk für eine optische Schwenkeinrichtung zur Zielerfassung in einem Suchkopf eines Lenkflugkörpers.

Aus der EP 1 586 195 B1 ist für eine optische Schwenkeinrichtung in einem Suchkopf eines Lenkflugkörpers ein Prismengelenk bekannt, wobei das Prismengelenk eine Anzahl von um eine Rollachse drehbaren ersten Prismen und eine Anzahl von um eine Nickachse bezüglich der Rollachse drehbaren zweiten Prismen umfasst. Die Nickachse und die Rollachse schneiden sich dabei unter einem Winkel von 90°. Die ersten und die zweiten Prismen können dabei jeweils auch zu einem einzigen Prisma zusammengefasst sein. Das beschriebene Prismengelenk umfasst insgesamt vier Einzelprismen, die gegen eine Basisfläche unter einem Winkel von 45° geneigte Seitenflächen gleicher Länge aufweisen. Als Ausführungsvariante wird auch offenbart, jeweils drei dieser Prismen zu einem einstückigen Prisma zusammenzufassen. Ein das Prismengelenk durcheilender Strahl wird insgesamt viermal mittels einer 90°-Totalreflexion an den Innenseiten der Seitenflächen der Prismen umgelenkt, so dass die optische Abbildung unabhängig von einer Drehung gegenüber der Rollachse und gegenüber der Nickachse ist.

Aufgabe der Erfindung ist es, ein Prismengelenk der eingangs genannten Art anzugeben, welches bei einer strukturfesten Detektions-/Sendeeinheit die Positionierung des optischen Pfades in einem vergleichsweise kleinen Teil eines großen beobachtbaren Raumwinkelbereiches ermöglicht und gegenüber dem Stand der Technik weiter verbessert ist.

Diese Aufgabe wird erfindungsgemäß gelöst durch ein Prismengelenk für eine optische Schwenkeinrichtung, mit einem um eine erste Drehachse drehbar gelagerten ersten Prisma und mit einem um eine zweite Drehachse gegenüber dem ersten Prisma gelagerten zweiten Prisma, wobei sich die erste Drehachse und die zweite Drehachse unter einem Schnittwinkel von 45° schneiden, wobei das erste und das zweite Prisma jeweils eine erste und eine zweite Seitenfläche sowie eine Basisfläche aufweisen, wobei die erste Seitenfläche zur Basisfläche unter dem Schnittwinkel und die zweite Seitenfläche zur Basisfläche unter dem halben Schnittwinkel geneigt ist, sowie mit einem dritten Prisma, welches gegenüber einer Basisfläche unter dem Schnittwinkel symmetrisch geneigte Seitenflächen aufweiset, wobei sich das erste und das zweite Prisma entlang der ersten Drehachse im Wesentlichen spiegelsymmetrisch gegenüberstehen und das dritte Prisma, jeweils mit seinen Seitenflächen angrenzend, zwischen dem ersten und dem zweiten Prisma angeordnet ist.

Die Erfindung geht dabei von der Erkenntnis aus, dass ein Prismengelenk zur vorgegebenen Ausrichtung eines optischen Pfades durch Rotation um eine erste Achse und durch Rotation um eine zweite Achse, wobei sich die Achsen unter einem Winkel von 90° schneiden, unnötige Bewegungseinschränkungen aufweist. Zudem beanspruchen die zur Bildung eines entsprechenden Prismengelenks nötigen 45° Prismen relativ viel Bauraum.

Die Erfindung geht dann weiter von der Überlegung aus, dass sich bei einem Schnittwinkel zwischen der ersten und der zweiten Drehachse von 45° das Erreichen gewisser Positionen des optischen Pfades deutlich vereinfacht. Insbesondere ist bei einer derartigen Ausgestaltung eine vollständige Drehung des zweiten Prismas um die unter 45° gegen die erste Drehachse geneigte zweite Drehachse konstruktiv einfach auszuführen. Des Weiteren lässt sich das Bauvolumen der für das Prismengelenk benötigten Prismen gegenüber einer 90°-Anordnung verringern, so dass sich insgesamt eine kompakte Bauform realisieren lässt. Auch kann aufgrund der notwendigen flacheren Prismen der optische Pfad durch das Prismengelenk verkleinert werden, so dass sich Abbildungsfehler reduzieren.

Bei der angegebenen Anordnung und Ausgestaltung der Prismen tritt ein abbildender, objektseitiger Strahl zunächst in das zweite Prisma ein und wird an den Innenseiten zweimal totalreflektiert. Aufgrund der gegebenen geometrischen Verhältnisse verlässt der Strahl nun das zweite Prisma senkrecht zu einer Seitenfläche und dringt in das dritte Prisma ein. An dessen Basisfläche findet eine 90°-Totalreflexion statt, so dass der Strahl senkrecht durch die gegenüberliegende Seitenfläche des dritten Prismas austritt und nun in das erste Prisma eindringt. An den Innenseiten des ersten Prismas wird der Strahl erneut zweimal totalreflektiert, so dass er das erste Prisma schließlich in Richtung entlang der ersten Drehachse verlässt.

Insgesamt ergibt sich somit beim Durchgang durch das Prismengelenk eine fünffache Totalreflexion, wobei der Strahlengang bezüglich des dritten Prismas symmetrisch verläuft. Aufgrund der flacheren Prismen ergibt sich insgesamt gegenüber einer 90°-Anordnung gemäß Stand der Technik ein verringertes Bauvolumen und ein verringerter optischer Weg durch die Prismen. Weiterhin resultieren ein verringerter Farbfehler sowie eine verringerte temperaturabhängige Fokusverschiebung und eine geringe Streulichtempfindlichkeit.

Die einzelnen Prismen des angegebenen Prismengelenks können einstückig ausgeführt sein. Dabei ist das dritte, mittlere Prisma entweder dem ersten oder dem zweiten Prisma zuzuordnen, so dass es entweder mit dem ersten Prisma um die erste Drehachse oder mit dem zweiten Prisma um die zweite Drehachse drehbar ist. In einer weiter vorteilhaften Variante sind die jeweils einander zugeordneten Prismen, d. h. entweder das erste Prisma und das dritte Prisma oder das zweite Prisma und das dritte Prisma, nicht als separate Prismen sondern als ein einstückiges Prisma ausgeführt. In diesem Fall lässt sich die Handhabung bei der Montage und Justage des Prismengelenks vereinfachen. Auch sind die Herstellungskosten hierdurch verringert.

In einer weiter vorteilhaften Ausgestaltung der Erfindung sind das dritte Prisma gegenüber dem ersten Prisma und das zweite Prisma gegenüber dem dritten Prisma drehbar ausgeführt, so dass eine dritte Drehachse resultiert, die sich mit der zweiten Drehachse unter einem Winkel von 45°, d. h. dem Schnittwinkel, schneidet. Ausgehend von der einfacheren Variante des Prismengelenks mit zwei Drehachsen, wobei sich das zweite Prisma mit dem zugeordneten dritten Prisma um die zweite Drehachse gegenüber dem ersten Prisma dreht, wird ein neuer Freiheitsgrad geschaffen, wobei sich nun das zweite Prisma gegenüber dem dritten Prisma um die dritte Drehachse drehen lässt. Wird gedanklich von einer einfachen Anordnung ausgegangen, wobei sich das zweite Prisma gegenüber dem ersten und dem zugeordneten dritten Prisma um die zweite Drehachse drehen lässt, wird durch diese Ausgestaltung ein neuer Freiheitsgrad dergestalt eingeführt, dass sich nun das dritte Prisma zusätzlich gegenüber dem ersten Prisma um die dritte Drehachse drehen lässt.

Insgesamt ergibt sich durch die um drei Drehachsen drehbare Ausführung des Prismengelenks eine Anordnung, die neben einer Drehung um die erste Drehachse Drehungen um zwei weitere Drehachsen erlaubt, die zueinander senkrecht stehen. Insbesondere sind die Drehachsen hierbei nicht miteinander gekoppelt. Auch tritt eine so genannte One-Axis-Singularität nicht auf. Diese Ausgestaltung wird aufgrund des symmetrischen Aufbaus des Prismengelenks ermöglicht. Mit dieser Ausgestaltung ist ein rasches Anfahren einer gewünschten Position des optischen Pfades aus einer vorgegebenen Position ermöglicht.

Hinsichtlich der Abbildungsfehler ist es vorteilhaft, wenn das erste und das zweite Prisma identisch ausgebildet sind. Auch reduzieren sich gegebenenfalls die Herstellungskosten, wenn für das erste und für das zweite Prisma auf identische Prismen zurückgegriffen werden kann.

In einer ersten weiter bevorzugten Ausführungsform des Prismengelenks sind das erste und das zweite Prisma mit ihren Basisflächen zueinander ausgerichtet. In dieser Ausführungsform ergibt sich insgesamt entlang der ersten Drehachse ein flacher und kompakter Aufbau, wobei aufgrund der gegebenen geometrischen Verhältnisse hierbei die Basisflächen der beiden Prismen zueinander um einen Winkel von 90° ausgerichtet sind. Somit lässt sich ein Rahmenaufbau zur Ausgestaltung der drehbaren Lagerung konstruktiv einfach gestalten. Auch bietet diese Variante den weiteren Vorteil, dass sich bei einer entsprechenden dreiachsigen Drehbarkeit alle drei Drehachsen in einem gemeinsamen Mittelpunkt schneiden. Insofern kann eine gegebenenfalls die optische Schwenkeinrichtung und das darin befindliche Prismengelenk abdeckende transparente Kuppel vorgesehen werden, die ihren Mittelpunkt in dem genannten Schnittpunkt hat.

In einer anderen konstruktiven Ausgestaltung des Prismengelenks sind das erste und das zweite Prisma mit ihren Seitenflächen zueinander ausgerichtet. Bei dieser Ausgestaltung ergibt sich ein bezüglich der ersten Drehachse räumlich ausgedehnterer Aufbau, da aufgrund der geometrischen Gegebenheiten das erste und das zweite Prisma nunmehr mit ihren Basisflächen zueinander senkrecht und insbesondere senkrecht zur ersten Drehachse ausgerichtet sind. Auch ergeben sich bei der Ausführung einer dreiachsigen Drehbarkeit gewisse konstruktive Nachteile, da sich nicht alle Drehachsen in einem gemeinsamen Schnittpunkt schneiden. Dennoch bietet diese Variante aufgrund ihrer symmetrischen Ausgestaltung gegenüber den bekannten Prismengelenken des Standes der Technik deutliche Vorteile und weist hier gegenüber insbesondere einem verringerten optischen Durchtrittsweg und verringerte Abbildungsfehler auf.

Aus kostentechnischen und konstruktiven Gründen wird zweckmäßigerweise das dritte Prisma derart ausgeführt, dass es einen Querschnitt in Gestalt eines gleichschenkeligen Dreiecks aufweist.

Zur weiteren Verbesserung können die Durchtrittsflächen der Prismen zusätzlich zur Beeinflussung der Abbildung wie insbesondere zu einer Aufweitung oder zu einer Fokussierung des Strahlenquerschnitts ausgebildet sein. Auch können dem Prismengelenk weitere Abbildungsoptiken zugefügt sein, die insbesondere zwischen der Objektseite und der Detektions-/Sendeeinheit ein reelles Zwischenbild erzeugen. Wird das reelle Zwischenbild in der Nähe oder innerhalb des Prismengelenks erzeugt, so kann die Dimension der Prismen weiter verringert werden, da in der Nähe des reellen Zwischenbilds der Strahlenquerschnitt verringert ist. Zur Abbildung des Zwischenbilds auf die Detektions-/Sendeeinheit ist in diesem Fall eine entsprechende Abbildungsoptik vorzusehen.

Vorteilhaft stellt sich weiter eine optische Schwenkeinrichtung zur Abbildung und/oder Projektion einer Objektszene dar, die eine Tragstruktur, eine in der Tragstruktur angeordnete Detektions-/Sendeeinheit, einen um eine erste Drehachse gegenüber der Tragstruktur drehbaren ersten Rahmen und einen um eine zweite Drehachse gegenüber dem ersten Rahmen drehbaren zweiten Rahmen umfasst, wobei sich die erste Drehachse und die zweite Drehachse unter einem Schnittwinkel von 45° schneiden, wenn zur optischen Verbindung zwischen dem ersten und dem zweiten Rahmen ein vorgenanntes Prismengelenk angeordnet ist.

In einer bevorzugten Ausgestaltung ist hierbei dem ersten Rahmen das erste Prisma und dem zweiten Rahmen das dritte Prisma zugeordnet, wobei ein um eine dritte Drehachse gegenüber dem zweiten Rahmen drehbarer dritter Rahmen vorgesehen ist, dem das zweite Prisma zugeordnet ist. Die bezüglich des Prismengelenks und hierbei insbesondere hinsichtlich der dreiachsigen Drehbarkeit genannten Vorteile können hierbei sinngemäß übertragen werden.

Ausführungsbeispiele der Erfindung werden anhand einer Zeichnung näher erläutert. Dabei zeigen jeweils schematisch in einer Schnittdarstellung:
- Fig. 1: ein in einer optischen Schwenkeinrichtung angeordnetes erstes Prismengelenk
- Fig.2: ein in einer optischen Schwenkeinrichtung angeordnetes zweites Prismengelenk und
- Fig.3: ein in einer optischen Schwenkeinrichtung angeordnetes drittes Prismengelenk.

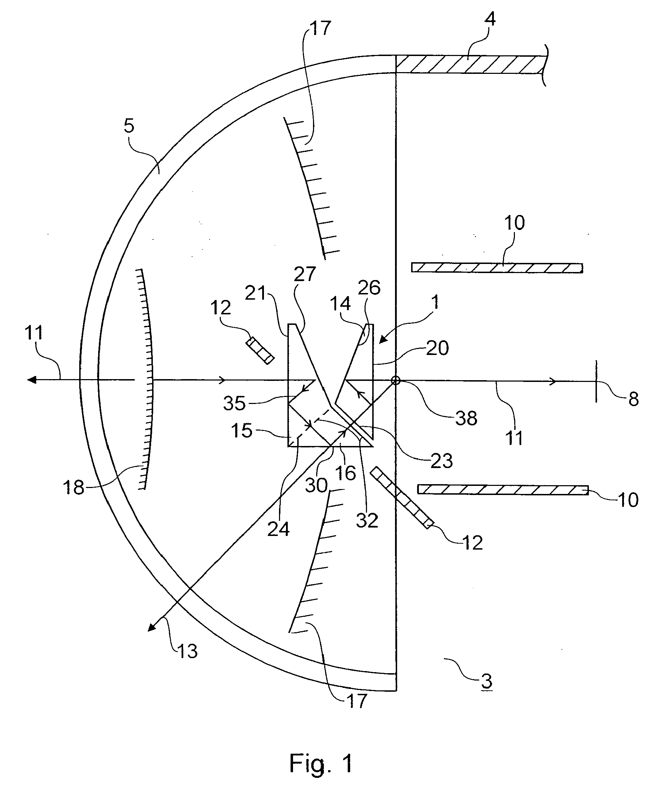

In Figur 1 ist schematisch in einer Schnittdarstellung ein erstes Prismengelenk 1 dargestellt, welches im optischen Pfad einer optischen Schwenkeinrichtung 3 angeordnet ist. Die optische Schwenkeinrichtung 3 umfasst hierbei eine Tragstruktur 4, auf der eine transparente Kuppel 5 ruht. Innerhalb der optischen Schwenkeinrichtung 3 ist strukturfest ein Detektor 8 zur abschnittsweisen Erfassung einer Objektszene angeordnet.

Die optische Schwenkeinrichtung 3 umfasst weiter einen ersten Rahmen 10, der gegenüber der Tragstruktur 4 um eine erste Drehachse 11 drehbar gelagert ist. Ein zweiter Rahmen 12 ist gegenüber dem ersten Rahmen 10 um eine zweite Drehachse 13 drehbar gelagert. Die erste Drehachse 11 und die zweite Drehachse 13 schneiden sich hierbei unter einem Schnittwinkel von 45°. Im Falle eines Flugkörpers wird gemeinhin die erste Drehachse 11 als Roll- und die zweite Drehachse 13 als Nickachse bezeichnet.

Als Bestandteil des Prismengelenks 1 ist ein erstes Prisma 14 auf dem ersten Rahmen 10 fest angeordnet. Das zweite Prisma 15 und das dritte Prisma 16, die vorliegend als einstückiges Element zusammengefasst sind, sind gegenüber dem ersten Prisma 14 drehbar an dem zweiten Rahmen 12 befestigt. An dem zweiten Rahmen 12 ist weiter eine Cassegrain-Optik zur Abbildung eines Gesichtsfeldes auf den Detektor 8 angeordnet. Die Cassegrain-Optik umfasst einen konkav-parabolischen Hauptspiegel 17 mit einer Mittenausnehmung, in welchem das Prismengelenk 1 angeordnet ist, und einen konvex-hyperbolischen Fangspiegel 18, der eingehende Strahlen in Richtung der Mittenausnehmung und somit in Richtung des Prismengelenks 1 ausrichtet, und gegebenenfalls zu einem reellen Zwischenbild fokussiert.

Das erste und das zweite Prisma 14 bzw. 15 weisen jeweils eine Basisfläche 20 bzw. 21 sowie eine erste Seitenfläche 23 bzw. 24 sowie eine zweite Seitenfläche 26 bzw. 27 auf. Die ersten Seitenflächen 23 und 24 sind dabei zur jeweiligen Basis 20 bzw. 21 um einen Winkel von 45° geneigt. Die zweiten Seitenflächen 26 bzw. 27 sind gegenüber der Basisfläche 20 bzw. 21 um einen Winkel von 22,5°, d. h. dem halben Schnittwinkel zwischen der ersten Drehachse 11 und der zweiten Drehachse, geneigt.

Das dritte Prisma 16 weist eine Basisfläche 30 auf, gegenüber der seine Seitenflächen 32 symmetrisch jeweils um einen Winkel von 45° geneigt sind. Dabei fällt eine seiner Seitenflächen 32 mit der ersten Seitenfläche 23 des zweiten Prismas 15 zusammen bzw. ist in der einstückigen Ausführung real nicht gegeben.

Ein durch die Basisfläche 21 des zweiten Prismas 15 einfallender Abbildungsstrahl wird zunächst an der zweiten Seitenfläche 27 des zweiten Prismas 15 unter 45° total reflektiert. Wie aus dem dargestellten Abbildungsstrahlengang 35 ersichtlich, wird der einfallende Strahl hierdurch erneut gegen die Basisfläche 21 zurückreflektiert und erfährt dort nun eine 90°-Totalreflexion. Der Strahl propagiert schließlich in das dritte Prisma 16, wo an dessen Basisfläche 30 eine weitere 90° Reflexion erfolgt. Schließlich tritt der Strahl an der Seitenfläche 32 des dritten Prismas 16 aus, überwindet die Koppelstelle und tritt über die erste Seitenfläche 23 in das erste Prisma 14 ein. An dessen Basisfläche 20 erfährt er eine weitere 90° Reflexion und wird gegen die zweite Seitenfläche 26 des ersten Prismas 14 gelenkt. Dort erfährt er eine 45°-Totalreflexion und wird schließlich entlang der ersten Drehachse 11 gelenkt, so dass er ohne Verluste aus der Basisfläche 20 des ersten Prismas 15 austritt.

Umgekehrt bewirkt das dargestellte Prismengelenk 1, dass ein ausgehend vom Detektor 8 entlang der ersten Drehachse 11 ausgehender Strahl objektseitig in eine Richtung umgelenkt wird, die gegenüber der zweiten Drehachse 13 unter dem Schnittwinkel , d. h. unter einem Winkel von 45°, geneigt ist. Sowohl der Elevations- als auch der Azimutwinkel dieser objektseitigen Richtung wird durch eine Drehung des zweiten Rahmens 12 um die zweite Drehachse 13 hierbei beeinflusst.

Es wird weiter ersichtlich, dass sich die erste Drehachse 11 und die zweite Drehachse 13 in einem Mittelpunkt 38 schneiden, der zugleich der Mittelpunkt für die sphärenförmige Kuppel 5 ist.

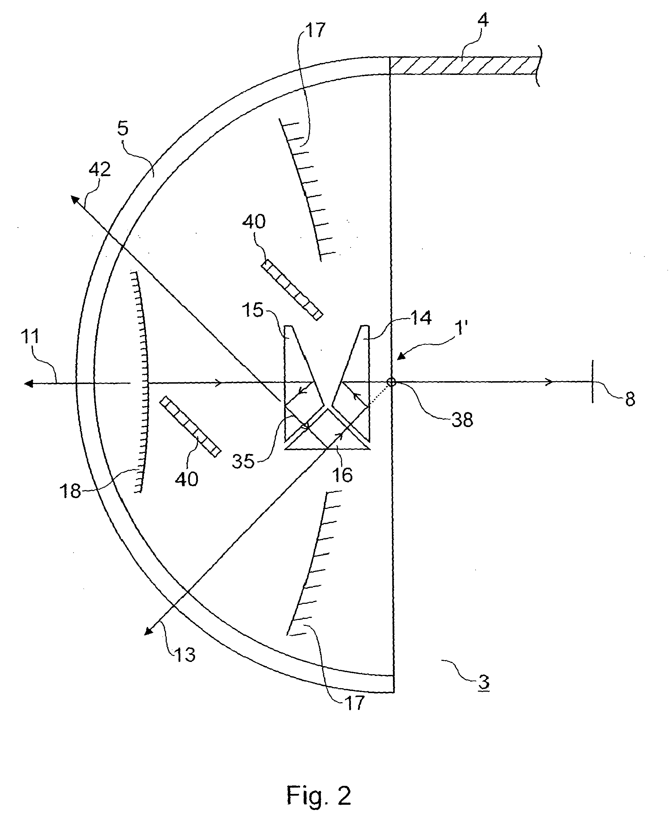

In Figur 2 ist wiederum in einem Schnitt schematisch eine zweite Prismenanordnung 1' dargestellt, die im optischen Pfad der Schwenkeinrichtung 3 gemäß Figur 1 angeordnet ist. Die in Figur 2 dargestellte zweite Prismenanordnung 1' unterscheidet sich von der in Figur 1 dargestellten ersten Prismenanordnung dadurch, dass nunmehr das zweite Prisma 15 und das dritte Prisma 16 getrennt voneinander als separate Prismen ausgeführt sind. Zusätzlich ist das zweite Prisma 15 einem dritten Rahmen 40 zugeordnet, der gegenüber dem zweiten Rahmen 12, wie er aus Figur 1 ersichtlich wird, um eine dritte Drehachse 42 drehbar gelagert ist. Der erste Rahmen 10 und der zweite Rahmen 12 sind in Fig. 2 nicht mehr mit eingezeichnet.

Mit dieser Anordnung ergibt sich ein zusätzlicher Freiheitsgrad. Insbesondere kann das zweite Prisma 15 und das dritte Prisma 16 unabhängig voneinander um die dritte Drehachse 42 bzw. um die zweite Drehachse 13 gedreht werden. Die dritte Drehachse 42 und zweite Drehachse 13 schneiden sich hierbei um einen Winkel von 90°.

Mit einer derartigen Ausgestaltung ist gegenüber dem Stand der Technik eine raschere Positionierung des optischen Pfads von einer vorgegebenen ersten Position zu einer vorgegebenen zweiten Position möglich. Da sich die dritte Drehachse 42 und die zweite Drehachse 13 in einem Punkt außerhalb des Schnittpunktes 38 der zweiten Drehachse 13 mit der ersten Drehachse 11 schneiden, ergeben sich gewisse konstruktive Nachteile bei der mechanischen Ausgestaltung.

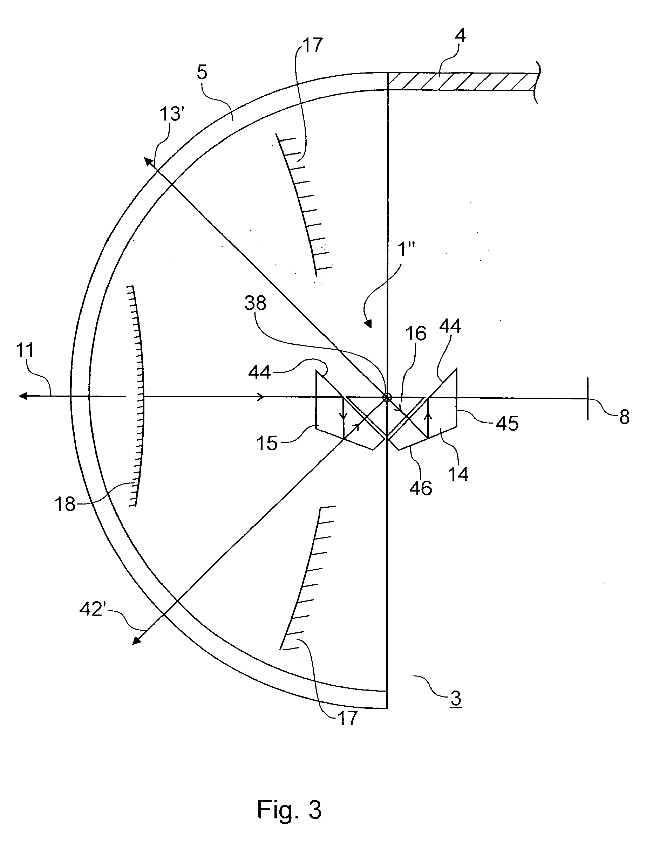

Diese Nachteile lassen sich mit einem dritten Prismengelenk 1" vermeiden, wie es in Figur 3 schematisch in einer Schnittdarstellung gezeigt ist. Die dritte Prismenanordnung 1" ist wiederum im optischen Pfad einer optischen Schwenkeinrichtung 3, wie sie in Figur 2 ausgeführt ist, angeordnet. Man erkennt wiederum die Tragstruktur 4 sowie die darauf ruhende Kuppel 5 und den strukturfesten Detektor 8. Auch wird die Cassegrain-Optik mit dem Hauptspiegel 17 und dem Fangspiegel 18 erkennbar.

Die dritte Prismenanordnung 1" umfasst nun ein erstes Prisma 14, ein zweites Prisma 15 und ein drittes Prisma 16, wobei nun aber das erste Prisma 14 und das zweite Prisma 15 mit ihren Basisflächen 44 zueinander ausgerichtet sind. Das dritte Prisma 16, welches wiederum mit zu seiner Basisfläche unter einem Winkel von 45° ausgerichteten gleichlangen Seitenflächen ausgeführt ist, befindet sich zwischen den Basisflächen des ersten und des zweiten Prismas 14 bzw. 15.

Ein eingehender Strahl durchdringt die erste Seitenfläche des zweiten Prismas 15 und wird an dessen Basisfläche 44 unter 90° total reflektiert. An der der Basisfläche gegenüberliegenden zweiten Seitenfläche erfolgt eine 45°-Totalreflektion, wodurch der Strahl in das dritte Prisma 16 eingelenkt wird. An dessen Basisfläche 44 erfolgt wiederum eine 90°-Totalreflexion, wodurch der Strahl in das erste Prisma eingelenkt wird und an dessen zweiter Seitenfläche eine 45°-Totalreflexion erfährt. Nach einer erneuten 90°-Totalreflexion an der Basisfläche 44 des ersten Prismas 14 tritt der Strahl aus dem ersten Prisma 14 heraus und ist entlang der ersten Drehachse 11 auf den Detektor 8 hin ausgerichtet.

Das erste Prisma 14 ist, wie aus Figur 1 ersichtlich, dem ersten Rahmen 10 zugeordnet. Im Unterschied zu Figur 2 ist nun jedoch das dritte Prisma 16 auf einem nicht eingezeichneten zweiten Rahmen angeordnet, der gegenüber dem ersten Rahmen um eine zweite Drehachse 13' drehbar gelagert ist. Das zweite Prisma 15 schließlich ist auf einem nicht eingezeichneten dritten Rahmen befestigt, der gegenüber dem zweiten Rahmen um eine dritte Drehachse 42' drehbar gelagert ist.

Es wird aus Figur 3 ersichtlich, dass sich im Unterschied zu Figur 2 bei der dargestellten Anordnung des Prismengelenks 1" die zweite Drehachse 13' und die dritte Drehachse 42' in einem gemeinsamen Schnittpunkt 38 mit der ersten Drehachse 11 schneiden. Dies ermöglicht eine einfache konstruktive Ausgestaltung der Rahmenteile. Insbesondere wird es möglich, das Prismengelenk 1" sowie die weiteren bewegbaren optischen Komponenten mit der Kuppel 5 hermetisch mit der Tragstruktur 4 abzuschließen, wobei die Kuppel 5 einen Mittelpunkt an der Stelle des Schnittpunkts 38 aufweist.

Aus Figur 3 wird auch ersichtlich, dass das dritte Prismengelenkt 1" quer zur ersten Querachse 11 eine verringerte Bauhöhe aufweist, Insgesamt wird somit eine kompaktere Bauform realisiert.

### Bezugszeichenliste

- 1, 1', 1'': Prismengelenk
- 3: Schwenkeinrichtung
- 4: Tragstruktur
- 5: Kuppel
- 8: Detektor
- 10: Erster Rahmen
- 11: Erste Drehachse
- 12: Zweiter Rahmen
- 13, 13': Zweite Drehachse
- 14: Erstes Prisma
- 15: Zweites Prisma
- 16: Drittes Prisma
- 17: Hauptspiegel
- 18: Fangspiegel
- 20,21: Basis
- 23, 24: Erste Seitenfläche
- 26, 27: Zweite Seitenfläche
- 30: Basisfläche
- 32: Seitenfläche
- 35: Strahlengang
- 38: Mittelpunkt
- 40: Dritter Rahmen
- 42, 42': Dritte Drehachse
- 44: Basis
- 45: Erste Seitenfläche
- 46: Zweite Seitenfläche

## Patentansprüche

1. Prismengelenk (1, 1', 1") für eine optische Schwenkeinrichtung (3), mit einem um eine erste Drehachse (11) drehbar gelagerten ersten Prisma (14) und mit einem um eine zweite Drehachse (13, 13') gegenüber dem ersten Prisma (14) drehbar gelagerten zweiten Prisma (15), wobei sich die erste Drehachse (11) und die zweite Drehachse (13, 13') unter einem Schnittwinkel von 45° schneiden, wobei das erste (14) und das zweite Prisma (15) jeweils eine erste (23 bzw. 24) und eine zweite Seitenfläche (26 bzw. 27) sowie eine Basisfläche (20 bzw. 21) aufweisen, wobei die erste Seitenfläche (23, 24) zur Basisfläche (20, 21) um den Schnittwinkel und die zweite Seitenfläche (26, 27) zur Basisfläche (20, 21) um den halben Schnittwinkel geneigt ist, sowie mit einem dritten Prisma (16), welches gegenüber einer Basisfläche (30) unter dem Schnittwinkel symmetrisch geneigte Seitenflächen (32) aufweist, wobei sich das erste und das zweite Prisma (14 bzw. 15) entlang der ersten Drehachse (11) im wesentlich spiegelsymmetrisch gegenüber stehen und das dritte Prisma (16), jeweils mit seinen Seitenflächen (32) angrenzend, zwischen dem ersten und dem zweiten Prisma (14 bzw. 15) angeordnet ist.

2. Prismengelenk (1, 1', 1") nach Anspruch 1,
wobei das dritte Prisma (16) dem ersten (14) oder dem zweiten Prisma (15) zugeordnet ist, insbesondere mit diesem einstückig ausgeführt ist.

3. Prismengelenk (1, 1', 1") nach Anspruch 1,
wobei das dritte Prisma (16) gegenüber dem ersten Prisma (14) und das zweite Prisma (15) gegenüber dem dritten Prisma (16) drehbar ausgeführt sind, so dass eine dritte Drehachse (42,42') resultiert, die sich mit der zweiten Drehachse (13,13') unter einem Winkel von 45° schneidet.

4. Prismengelenk (1, 1', 1") nach einem der vorhergehenden Ansprüche,
wobei das erste Prisma (14) und das zweite Prisma (15) identisch ausgebildet sind.

5. Prismengelenk (1, 1', 1") nach einem der vorhergehenden Ansprüche,
wobei das erste Prisma (14) und das zweite Prisma (15) mit ihren Basisflächen (20 bzw. 21) zueinander ausgerichtet sind.

6. Prismengelenk (1, 1', 1") nach einem der Ansprüche 1 bis 4,
wobei das erste Prisma (14) und das zweite Prisma (15) mit ihren Seitenflächen (26 bzw. 27) zueinander ausgerichtet sind.

7. Prismengelenk (1, 1', 1") nach einem der vorhergehenden Ansprüche,
wobei das dritte Prisma (16) einen Querschnitt in Gestalt eines gleichschenkeligen Dreiecks aufweist.

8. Optische Schwenkeinrichtung (3) zur Abbildung und/oder Projektion einer Objektszene, mit einer Tragstruktur (4), mit einer in der Tragstruktur (4) angeordneten Detektions-/Sendeeinheit (8), mit einem um eine erste Drehachse (11) gegenüber der Tragstruktur (4) drehbaren ersten Rahmen (10), und mit einem um eine zweite Drehachse (13, 13') gegenüber dem ersten Rahmen (10) drehbaren zweiten Rahmen (12), wobei sich die erste Drehachse (11) und die zweite Drehachse (13, 13') unter einem Schnittwinkel von 45° schneiden, und mit einem Prismengelenk (1, 1', 1") nach einem der vorhergehenden Ansprüche, welches zur optischen Verbindung zwischen dem ersten und dem zweiten Rahmen (10 bzw.12) angeordnet ist.

9. Schwenkeinrichtung (3) nach Anspruch 8,
wobei dem ersten Rahmen (10) das erste Prisma (14) und dem zweiten Rahmen (12) das dritte Prisma (16) zugeordnet ist, und wobei ein um eine dritte Drehachse (13, 13') gegenüber dem zweiten Rahmen (12) drehbarer dritter Rahmen (40) vorgesehen ist, dem das zweite Prisma (15) zugeordnet ist.
